# EUROPÄISCHE PATENTANMELDUNG

(11) **EP 4 751 559 A2**
(43) Veröffentlichungstag der Anmeldung: **03.06.2026**
(21) Anmeldenummer: 25217607.8
(22) Anmeldetag: 21.11.2025
(51) Int. Cl.: A01G 27/00

(54) **VORRICHTUNG UND SYSTEM ZUR BEWÄSSERUNG VON PFLANZEN**

(30) Priorität: 27.11.2024 DE 102024135105
(71) Anmelder: Rohrer Holding GmbH, 76537 Sinzheim (DE)
(72) Erfinder: Rudolf Till, Rudolf, 76530 Baden-Baden (DE)
(74) Vertreter: Witte, Weller & Partner Patentanwälte mbB

(57) **Zusammenfassung**

Die Erfindung betrifft eine Vorrichtung zur Bewässerung von Pflanzen, mit einer Gießschale, die einen Boden und eine Wandung mit einer Höhe h aufweist und ausgelegt ist, eine Flüssigkeit aufzunehmen und zu halten; einem Gießbehälter zur Aufnahme einer Flüssigkeit und -im Arbeitsmodus- zur Abgabe der Flüssigkeit in die Gießschale, wobei der Gießbehälter aufweist: ein Behältervolumen für die Flüssigkeit, und ein Auslaufrohr zum Ausbringen der Flüssigkeit aus dem Behältervolumen in die Gießschale, wobei das Auslaufrohr am Behältervolumen angebracht ist; und einem Auslaufelement, das mit dem Auslaufrohr zusammenwirkt und eine Auslauföffnung aufweist, deren Höhe -im Arbeitsmodus- relativ zu dem Auslaufrohr veränderbar ist. Die Erfindung betrifft ferner ein Bewässerungssystem mit einer Vorrichtung zur Bewässerung.

## Beschreibung

Die vorliegende Erfindung betrifft eine Vorrichtung zur Bewässerung von Pflanzen. Ferner betrifft die Erfindung ein System mit einer solchen Vorrichtung zur Bewässerung von Pflanzen.

Im Stand der Technik sind verschiedene Vorrichtungen zur Bewässerung von Pflanzen bekannt, die eine zuverlässige Wasserversorgung sicherstellen sollen. Ein Beispiel hierfür ist die Veröffentlichung WO2020/015972 A1, in der ein System beschrieben wird, das den Zulauf des Gießwassers auf ein festes Niveau reguliert.

Obgleich sich dieses System aus der WO2020/015972 A1 in der Praxis bewährt hat, besteht ein Nachteil darin, dass sie ein festes, nicht verstellbares Wasserniveau aufweist, was häufig zu Staunässe und im schlimmsten Fall zum Absterben der Pflanze führen kann. Insbesondere im Außenbereich kann ein solches System bei längeren Regenperioden eine permanente Staunässe verursachen.

Die bestehenden Bewässerungssysteme weisen folgende Nachteile auf: Ein festes Wasserniveau führt zu einer unflexiblen Anpassung an unterschiedliche Pflanzentypen und deren Wasserbedarf. Bei Regenperioden bleibt das überschüssige Wasser unkontrolliert in der Schale stehen, was Staunässe verursacht. Das überschüssige Niederschlagswasser fließt ungenutzt ab und kann nicht zur späteren Bewässerung genutzt werden.

Die vorliegende Erfindung löst diese Probleme durch eine Vorrichtung zur Bewässerung von Pflanzen, die eine einstellbare Niveauregulierung ermöglicht. Anspruch 1 definiert eine Vorrichtung zur Bewässerung von Pflanzen mit einer Gießschale, die einen Boden und eine Wandung mit einer Höhe h aufweist und ausgelegt ist, eine Flüssigkeit aufzunehmen und zu halten, einem Gießbehälter zur Aufnahme einer Flüssigkeit und -im Arbeitsmodus- zur Abgabe der Flüssigkeit in die Gießschale, wobei der Gießbehälter ein Behältervolumen, vorzugsweise ein hermetisch dicht abschließbares Behältervolumen für die Flüssigkeit, und ein Auslaufrohr zum Ausbringen der Flüssigkeit aus dem Behältervolumen in die Gießschale aufweist, wobei das Auslaufrohr am Behältervolumen angebracht ist; und einem Auslaufelement, das mit dem Auslaufrohr zusammenwirkt und eine Auslauföffnung aufweist, deren Höhe -im Arbeitsmodus- relativ zu dem Auslaufrohr veränderbar ist.

Das heißt mit anderen Worten, dass das Auslaufelement in der Höhe verstellbar ist und darüber das Flüssigkeitsniveau in der Gießschale einstellbar ist. Insbesondere der obere Rand der Auslauföffnung (höchster Punkt der Auslauföffnung) bestimmt damit das Flüssigkeitsniveau. Befindet sich die Auslauföffnung vollständig in der Flüssigkeit gibt es keine Möglichkeit, das Luft in den Gießbehälter, das ansonsten luftdicht ist, einströmen kann. Damit kann der im Gießbehälter vorhanden Flüssigkeitsvorrat auch nicht ausströmen. Sobald jedoch das Flüssigkeitsniveau bzw. der Flüssigkeitspegel absinkt und einen Teil der Auslauföffnung freilegt, gelangt Luft in den Gießbehälter und Flüssigkeit strömt durch die Auslauföffnung in die Gießschale.

Damit ist eine einfache Lösung zur Einstellung des Flüssigkeitsniveaus in der Gießschale erreichbar.

Die Aufgabe der Erfindung wird damit vollkommen gelöst.

In einer Weiterbildung der Erfindung umfasst das Auslaufelement ein Rohrelement mit zwei winkelig zueinander verlaufenden Abschnitten, wobei einer der Abschnitte am Auslaufrohr drehbar angebracht ist und der andere die Auslauföffnung aufweist.

Diese Bauweise ermöglicht eine flexible Anpassung der Auslaufhöhe und verhindert Staunässe.

In einer weiteren Ausgestaltung der Erfindung ist der Winkel zwischen den beiden Rohrabschnitten ein stumpfer Winkel.

Dies erleichtert die Bedienung und sorgt für eine gleichmäßige Wasserverteilung.

In einer Weiterbildung der Erfindung erstreckt sich im Arbeitsmodus der erste Rohrabschnitt über die Wandung der Gießschale, während sich der zweite Rohrabschnitt nach unten Richtung Boden erstreckt, und die Auslauföffnung am zweiten Rohrabschnitt die Höhe des Flüssigkeitspegels bestimmt.

Dadurch wird eine präzise Steuerung des Wasserpegels ermöglicht.

In einer weiteren Ausgestaltung der Erfindung ist das Auslaufrohr an der Seite des Behältervolumens angebracht.

Dies vereinfacht die Konstruktion und verbessert die Handhabung der Vorrichtung.

In einer Weiterbildung der Erfindung ist das Auslaufelement in einer Öffnung in der Wandung der Gießschale um eine Längsachse drehbar gehalten, wobei die Auslauföffnung versetzt zur Längsachse angeordnet ist, sodass durch Drehen des Auslaufelements die Höhe der Auslauföffnung relativ zum Boden der Gießschale verändert werden kann.

Der Vorteil liegt darin, dass eine erhöhte Flexibilität bei der Anpassung des Wasserniveaus ermöglicht wird.

In einer weiteren Ausgestaltung der Erfindung ist ein Ende des Auslaufelements als Kupplungselement ausgelegt, und das Ende des Auslaufrohrs als Kupplungsgegenstück, sodass eine lösbare Kupplung zwischen Kupplungselement und Kupplungsgegenstück möglich ist.

Der Vorteil liegt in einem einfachen Zusammenbau und einer einfachen Wartung der Vorrichtung.

In einer Weiterbildung der Erfindung weist das Kupplungsgegenstück ein erstes Ventil auf, das im gekuppelten Zustand geöffnet und im nicht-gekuppelten Zustand geschlossen ist.

Diese Maßnahme verhindert ungewolltes Auslaufen von Flüssigkeit bei Nichtbenutzung.

In einer weiteren Ausgestaltung der Erfindung verfügt der Gießbehälter über ein zweites und ein drittes Ventil, die miteinander gekoppelt sind, wobei das zweite Ventil die Auslassöffnung öffnet und schließt und das dritte Ventil die Zulauföffnung in das Behältervolumen schließt und öffnet.

Diese Maßnahme hat den Vorteil einer präzisen Steuerung des Flüssigkeitsflusses.

In einer Weiterbildung der Erfindung ist eine Auffangschale für Flüssigkeit vorgesehen, die eine Verbindung zur Zulauföffnung besitzt, und ein Steuerelement, das ausgelegt ist, das dritte Ventil zu öffnen, wenn der Flüssigkeitspegel in der Auffangschale einen Schwellenwert überschreitet, um die Flüssigkeit in das Behältervolumen zu leiten, wobei das zweite Ventil dann die Auslass-Öffnung schließt.

Der Vorteil liegt darin, dass ein automatisches Nachfüllen des Gießbehälters ermöglicht wird.

In einer weiteren Ausgestaltung der Erfindung weist das Steuerelement einen Schwimmer auf.

Der Vorteil liegt darin, dass ein automatisches Anpassen des Wasserstands ohne zusätzlichen Energieaufwand möglich ist..

In einer Weiterbildung der Erfindung sind zwei Gießbehälter vorgesehen.

Der Vorteil besteht in einer Redundanz und einer erweiterten Kapazität für größere Pflanzensysteme.

In einer weiteren Ausgestaltung der Erfindung ist die Gießschale kreisförmig und auf einem Transportboden vorgesehen.

Der Vorteil besteht in einem einfachen Transport und Einsatz in verschiedenen Anwendungsbereichen, z.B. für eine mobile und schnelle Stadtbegrünung.

In einer Weiterbildung der Erfindung enthält die Gießschale einen Kulturbehälter, der aus mehreren Wandelementen aufgebaut ist, die eine Lochstruktur aufweisen und voneinander trennbar sind.

Diese Maßnahme verbessert die Belüftung und Schulung der Pflanzenwurzeln.

In einer weiteren Ausgestaltung der Erfindung sind die Wandelemente schwenkbar an der Gießschale angebracht.

Die Maßnahme erhöht die Flexibilität beim Einsetzen und Entnehmen der Pflanzen.

In einer Weiterbildung der Erfindung bilden die Wandelemente eine konische Kulturbehälter-Form.

Der Vorteil besteht in einer optimalen Wasser- und Nährstoffverteilung im Substrat.

In einer weiteren Ausgestaltung der Erfindung ist an der Gießschale ein Pflanztopf vorgesehen, der aus mehreren Wandelementen mit geschlossener Struktur aufgebaut ist.

Der Vorteil besteht in einem verbesserten Schutz der Pflanzen vor äußeren Einflüssen. Zudem lässt sich der Pflanztopf, und damit bspw. auch das das äußere Dekor schnell tauschen.

In einer Weiterbildung der Erfindung sind die Wandelemente des Pflanztopfs an der Gießschalte schwenkbar angebracht.

Diese Maßnahme ermöglicht eine leichte Reinigung und Austausch der Elemente. Zudem wird der Austausch sowie die Pflege der Pflanze und das Umtopfen erleichtert.

In einer weiteren Ausgestaltung der Erfindung umschließen die Wandelemente des Pflanztopfs den Kulturbehälter zumindest teilweise.

Der Vorteil ist eine erhöhte Stabilität und Schutz der Pflanzen.

Die Aufgabe der Erfindung wird auch von einem System zur Bewässerung einer Pflanze gemäß Anspruch 20 gelöst. Das System umfasst eine Bewässerungsvorrichtung gemäß Anspruch 1, eine Wanne, die die Bewässerungsvorrichtung vollständig aufnehmen kann, sowie eine Rinnenvorrichtung zum Sammeln und Zuführen von Oberflächenwasser zur Bewässerungsvorrichtung.

Der Vorteil dieser Lösung besteht darin, dass eine effizientere Nutzung von Regenwasser möglich wird.

In einer weiteren Ausgestaltung der Erfindung ist die Rinnenvorrichtung mit einer Filtereinrichtung ausgestattet, um das Wasser vor der Zuführung zu filtern.

Damit lässt sich der Schutz vor Verunreinigungen erhöhen.

In einer Weiterbildung der Erfindung umfasst die Rinnenvorrichtung ein Rinnenelement und einen Auffangbehälter.

Damit ist ein sicheres Sammeln und Speichern des Wassers gewährleistet.

In einer weiteren Ausgestaltung der Erfindung verfügt die Filtereinrichtung über mehrere Filterelemente, die sowohl dem Rinnenelement als auch dem Auffangbehälter zugeordnet sein können.

Damit wird die Wasserreinheit und Schutz der Pflanzen erhöht.

In einer Weiterbildung der Erfindung besitzt der Auffangbehälter einen Überlauf zur Bewässerungsvorrichtung.

Der Vorteil ist eine einfache Zuleitung von Oberflächenwasser an die Bewässerungsvorrichtung und damit optimierte Wasserzufuhr.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1a, b eine: Bewässerungsvorrichtung in zwei unterschiedlichen Ansichten;
- Fig. 2: die Bewässerungsvorrichtung gemäß Fig. 1 beim Füllen;
- Fig. 3: eine Abwandlung der Bewässerungsvorrichtung von Fig. 1;
- Fig. 4: eine weitere Abwandlung der Bewässerungsvorrichtung gemäß Fig. 1;
- Fig. 5a-e: verschiedene Ansichten eines Kulturbehälters;
- Fig. 6: eine weitere Ausgestaltung einer Bewässerungsvorrichtung;
- Fig. 7: eine Schnittansicht eines Teils der Bewässerungsvorrichtung von Fig. 6;
- Fig. 8: eine Schnittansicht eines Teils der Bewässerungsvorrichtung von Fig. 6;
- Fig. 9: eine Schnittansicht eines Teils der Bewässerungsvorrichtung von Fig. 6
- Fig. 10a, b: zwei Detailansichten der Bewässerungsvorrichtung von Fig. 9;
- Fig. 11a, b: zwei Detailansichten der Bewässerungsvorrichtung von Fig. 9
- Fig. 12: eine perspektivische Darstellung eines Teiles der Bewässerungsvorrichtung von Fig. 9
- Fig. 13: eine perspektivische Ansicht des Kulturbehälters in einer Pflanzgrube;
- Fig. 14a, b: zwei Ansichten einer weiteren Ausgestaltung des faltbaren Kulturbehälters;
- Fig. 15: eine perspektivische Ansicht eines Bewässerungssystems;
- Fig. 16: eine Schnittansicht des Bewässerungssystems von Fig. 16;
- Fig. 17: eine perspektivische Darstellung einer Rinnenvorrichtung des Bewässerungssystems von Fig. 15; und
- Fig. 18: eine Schnittdarstellung der Rinnenvorrichtung von Fig. 17.

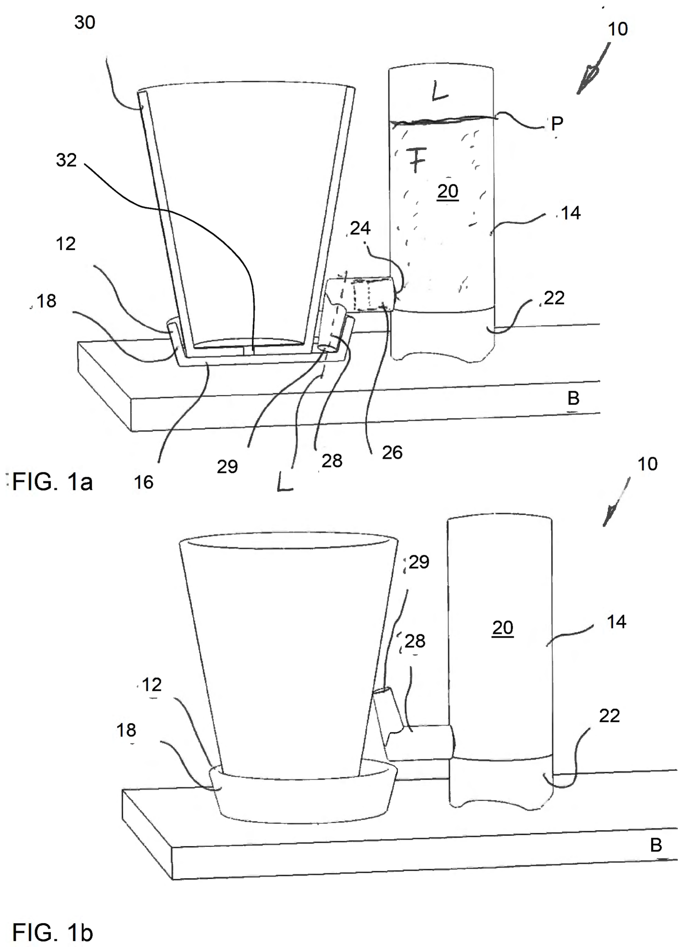

In Figuren 1a, 1b ist eine Bewässerungsvorrichtung in zwei unterschiedlichen Ansichten dargestellt und mit dem Bezugszeichen 10 gekennzeichnet. Die Bewässerungsvorrichtung 10 umfasst eine Gießschale 12 und einen Gießbehälter 14, die nebeneinander auf einem Boden B stehen. Die Gießschale 12 weist einen Boden 16 und eine umlaufende Wandung 18 auf, wobei die Wandung 18 eine Höhe h besitzt. Die Gießschale 12 ist ausgelegt, eine Flüssigkeit, insbesondere Wasser aufzunehmen und zu halten.

Die Gießschale 12 hat bevorzugt eine Kreisform mit einem Durchmesser, der ausreicht, um einen Pflanztopf 30 aufzunehmen. D.h mit anderen Worten, dass der Pflanztopf 30 mit seinem unteren Abschnitt in der Gießschale 12 Platz hat. Selbstverständlich kann die Gießschalte 12 auch andere Formen aufweisen. Der Pflanztopf 30 hat vorzugsweise in seinem Boden zumindest ein Loch 32, so dass Wasser in der Gießschale 12 in den Pflanztopf gelangen und damit die Pflanze mit Wasser versorgen kann. Die Höhe h der Wandung 18 der Gießschale ist dabei höher ausgestaltet als die Dicke des Bodens des Pflanztopfs 30.

Der Gießbehälter 14 weist vorzugsweise eine zylindrische Form auf mit einem Innenraum, der ein Behältervolumen 20 bildet. In diesem Behältervolumen 20 kann Wasser F oder eine andere Flüssigkeit aufgenommen werden. Der Gießbehälter 14 weist einen Fuß 22 auf, der das Behältervolumen 20 trägt. Es versteht sich, dass der Gießbehälter 14 auch andere Formen annehmen kann.

Im unteren Bereich des Behältervolumens 20, d. h. benachbart zum oberen Rand des Fußes 22, ist eine Öffnung 24 im Gießbehälter vorgesehen, die ausgelegt ist, das Wasser aus dem Behältervolumen 20 ausströmen zu lassen.

Der Öffnung 24 ist ein Auslaufrohr 26 zugeordnet, das sich etwa rechtwinklig zur Außenwand des Behältervolumens 20 erstreckt. Bevorzugt ist das Auslaufrohr 26 fest mit der Außenwand verbunden.

Auf dieses Auslaufrohr 26 ist ein Auslaufelement 28 dichtend aufgesteckt, wobei das Auslaufelement 28 zwei winkelig zueinander angeordnete Abschnitte aufweist. Aus Figur 1a ergibt sich, dass die Längsachse des einen Abschnitts des Auslaufelements 28 in einem stumpfen Winkel zur Längsachse des anderen Abschnitts des Auslaufelements 28, das auf das Auslaufrohr 26 aufgesteckt ist, verläuft. Das Ende des Auslaufelements 28 weist eine Auslauföffnung 29 auf, die im in Figur 1a gezeigten Ausführungsbeispiel nahe des Bodens 16 der Gießschale 12 liegt. Durch die winkelige Anordnung der beiden Abschnitte des Auslaufelements 28 liegt die Auslauföffnung 29 nicht parallel zum Boden 16 der Gießschale 12.

Wie bereits erwähnt ist das Auslaufelement 28 auf das Auslaufrohr 26 aufgesteckt, sodass eine Drehung des Auslaufrohrs 26 um die Längsachse möglich ist. Diese Drehung des Auslaufelements 28 ermöglicht, den Abstand der Auslauföffnung 29 zum Boden 16 zu verändern.

In Figur 1b ist der Gießbehälter 14 mit einem Auslaufelement 28 gezeigte, dessen Auslauföffnung 29 nach oben gerichtet ist. Gegenüber der in Figur 1a gezeigten Position ist folglich die Position des Auslaufelements um 180° gedreht.

Die Funktionsweise der Bewässerungsvorrichtung 10 ist nun wie folgt. Der Gießbehälter 14 gibt Wasser über das Auslaufelement 28 in die Gießschale 12 ab, solange bis die Auslauföffnung 29 vollständig unter der Wasseroberfläche in der Gießschale 12 liegt. Dann kann keine Luft mehr von außen über das Auslaufelement 28 in das Behältervolumen 20 eindringen. Durch eine hermetische Abdichtung des Behältervolumens 20 (mit Ausnahme der Öffnung 24) kann sich folglich das mit Luft L gefüllte Teilvolumen des Behältervolumens 20 nicht mehr vergrößern, sodass dann auch keine Flüssigkeit F mehr austreten kann.

Diese Anordnung ermöglicht folglich eine automatische Abgabe von Wasser aus dem Gießbehälter 14 in die Gießschale 12 immer dann, wenn der Wasserpegel bzw. das Wasserniveau in der Gießschale unter den höchsten Punkt (relativ zum Boden 16 der Gießschale) der Auslauföffnung 29 fällt. Dadurch, dass das Auslaufelement 28 drehbar ist, kann folglich der gewünschte Wasserpegel in der Gießschale 12 eingestellt werden. Auf dieses Weise ist es unter anderem möglich, den Wasserpegel in der Gießschale an unterschiedliche Bodendicken von Pflanztöpfen anzupassen. Ist der Boden etwas dicker wird der Wasserpegel entsprechend erhöht und umgekehrt.

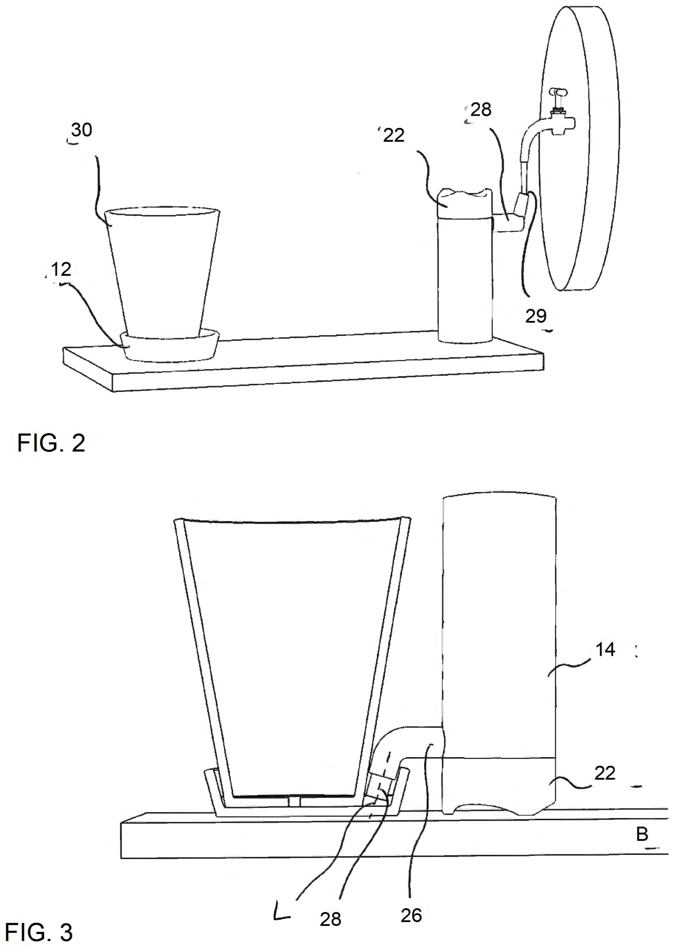

In Figur 2 ist der Fall gezeigte, wie der Gießbehälter 14 mit Wasser aufgefüllt werden kann. Hierbei wird der Gießbehälter 14 kopfüber auf den Boden B gestellt und über das Auslaufelement 28 mit Wasser gefüllt. Ist das Behältervolumen 20 mit Wasser aufgefüllt, kann der Gießbehälter 14 wieder in die in Figur 1a gezeigte Position gebracht werden.

In Figur 3 ist eine kleine Abwandlung der Bewässerungsvorrichtung 10 dargestellt. In diesem Fall ist das Auslaufrohr 26 als winkeliges Element ausgeführt und fest mit der Außenwand des Gießbehälters 14 verbunden. Am Ende des Auslaufrohrs 26 ist nun das Auslaufelement 28 eingesteckt. Durch Veränderung der Einstecktiefe des Auslaufelements 28 kann der Abstand der Auslauföffnung 29 gegenüber dem Boden 16 der Gießschale 12 eingestellt werden. Auch bei dieser Ausgestaltung liegt die Auslauföffnung 29 des Auslaufelements 28 schräg zum Boden 16 der Gießschale 12.

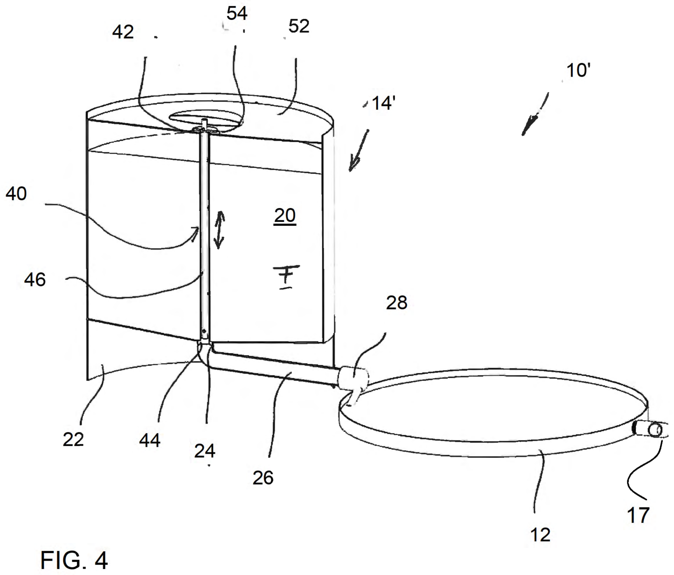

In Figur 4 ist eine weitere Ausgestaltung einer Bewässerungsvorrichtung 10' dargestellt. Im Unterschied zu der zuvor beschriebenen Bewässerungsvorrichtung 10 ist die Öffnung 24 im Gießbehälter 14' vorzugsweise mittig im Boden des Behältervolumens 20 vorgesehen. Das Auslaufrohr 26 ist an der Öffnung 24 angebracht und erstreckt sich winkelig bis zu der Gießschale 12, wobei am Ende ein Auslaufelement 28 drehbar aufgesteckt ist. Dieses Auslaufelement 28 entspricht im Wesentlichen dem Auslaufelement 28 von Figur 1a. Das bedeutet dann auch, dass die Funktionalität identisch ist zu jener, die zuvor mit Bezug auf die Figur 1a erläutert wurde. D. h. die Gießschale 12 kann über den Gießbehälter 14' befüllt werden, wobei der Füllstand über den Abstand der Auslassöffnung 29 zu dem Boden 16 der Gießschale 12 definiert werden kann. Die Figur lässt noch erkennen, dass die Gießschale 12 im Bereich ihrer Wandung einen Überlauf 17 aufweist. Dieser Überlauf dient dazu, überschüssiges Wasser, bspw. nach einem Regen, aus der Gießschale abzuführen, um so bspw. Staunässe im Pflanztopf zu verhindern.

Der in Figur 4 gezeigte Gießbehälter 14' weist zudem ein Ventil 40 auf, welches zwei Verschlusskörper 42, 44 besitzt, die über einen Schaft 46 miteinander verbunden sind. Die beiden Verschlusskörper 42, 44 wirken jeweils mit einem Ventilsitz 48, 49 zusammen. Der Verschlusskörper 42 liegt am oberen Ende des Behältervolumens 20 und der andere zweite Verschlusskörper 44 am unteren Ende. Der untere zweite Verschlusskörper 44 öffnet und schließt die Öffnung 24 im Gießbehälter 14'. Der obere Ventilsitz 48 ist in einer Öffnung 54 einer Auffangschale 52 vorgesehen. Die Auffangschale 52 bildet den oberen Abschluss des Gießbehälters 14' und hat die Funktion, beispielsweise Regenwasser aufzufangen, zu sammeln und dann über die Öffnung 54 in das Behältervolumen 20 zu führen. Die beiden Verschlusskörper 42,44 sind so ausgelegt, dass in einem ersten Zustand die Öffnung 24 geschlossen und die obere Öffnung 54 geöffnet ist und in einem zweiten Zustand die untere Öffnung 24 geöffnet und die obere Öffnung 54 geschlossen ist. Insbesondere im zweiten Zustand ist es erforderlich, dass keine Luft über die Öffnung 54 in das Behältervolumen 20 eindringen kann.

Das Ventil 40 kann zwischen dem ersten Zustand und dem zweiten Zustand manuell oder automatisch abhängig von bestimmten Parametern geschaltet werden. Ein solcher Parameter kann eine entsprechende Menge an Wasser in der Auffangschale 52 sein. D.h. mit anderen Worten, ist in der Auffangschale 52 eine bestimmte Menge an Wasser (bestimmter Wasserpegel), öffnet der obere Verschlusskörper 42 und das Wasser fließt in das Behältervolumen. Der Parameter könnte beispielsweise durch einen -in Figur 4 nicht gezeigten- Schwimmer am oberen Verschlusskörper 42 erfasst werden. Der Schwimmer geht mit steigendem Wasserpegel nach oben und betätigt so das Ventil. Der Wasserpegel, der ein Öffnen auslöst, kann bspw. eingestellt werden.

Die Bewässerungsvorrichtung gemäß Figur 4 hat gegenüber der zuvor beschriebenen Bewässerungsvorrichtung die weitere Funktionalität, Regenwasser in der Auffangschale 52 aufzufangen, zu sammeln und dann in das Behältervolumen 20 abzugeben. So lässt sich vorteilhafterweise auch Regenwasser zur Bewässerung der Pflanze in der Gießschale 12 nutzen.

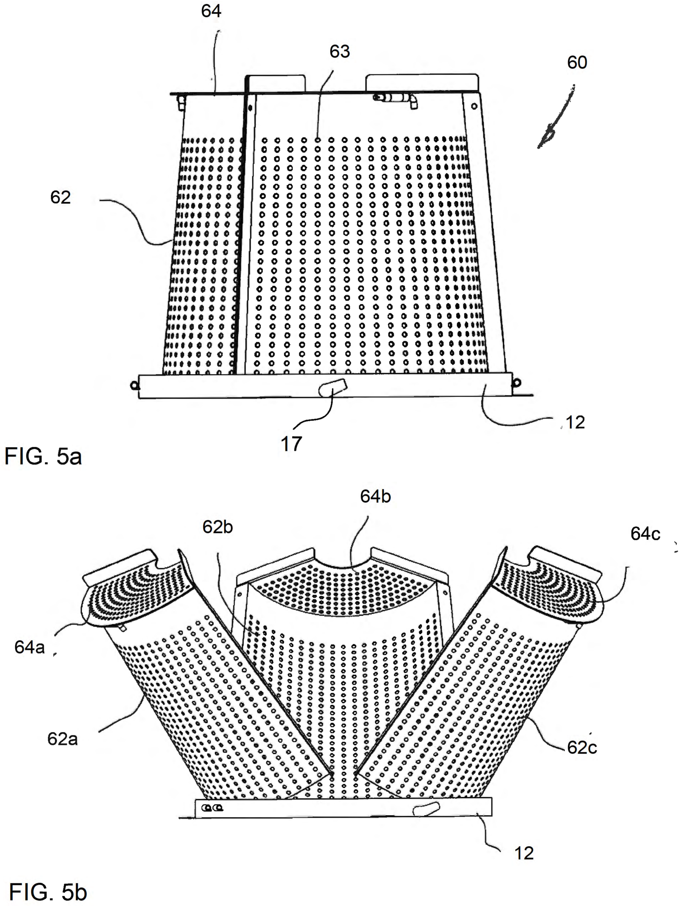

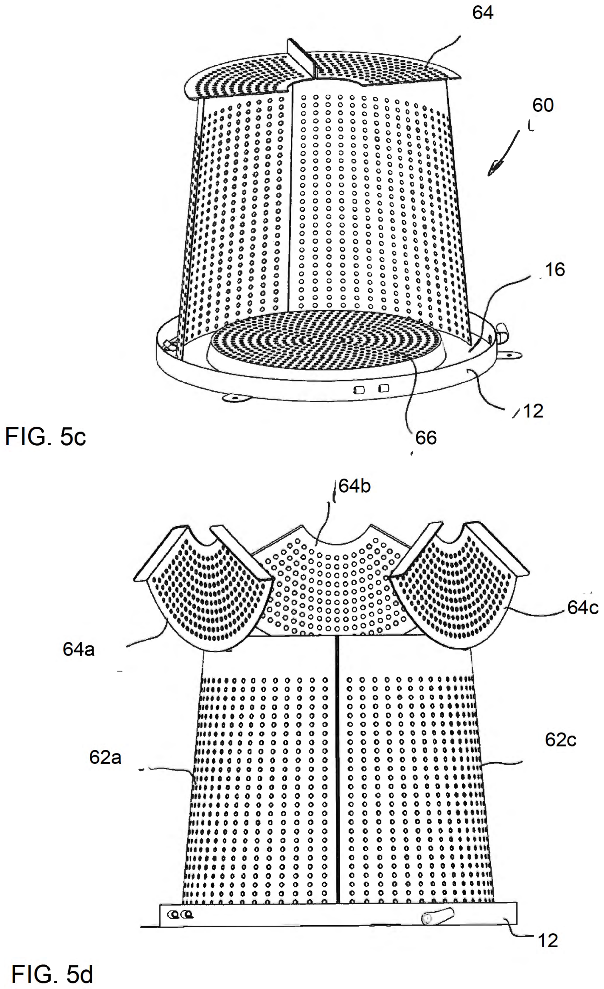

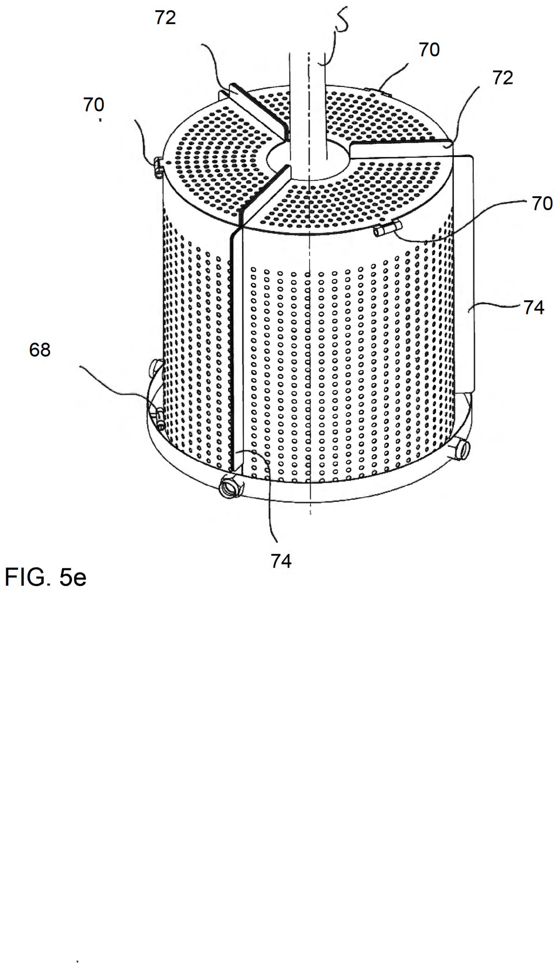

In den Figuren 5a, b, c, d und e ist ein sogenannter Kulturbehälter 60 dargestellt, der dazu dient, beispielsweise den Wurzelballen einer Pflanze, bspw. eines Baums, aufzunehmen und zu halten. Der Kulturbehälter 60 ist in der Gießschale 12 vorgesehen, sodass der Wurzelballen der Pflanze über das Wasser in der Gießschale 12 bewässert werden kann.

Der Kulturbehälter 60 weist eine Wandung 62 auf, die eine zylindrische, konische Form aufweist. Der Durchmesser der Wandung 62 ist im Bereich der Gießschale 12 größer als am gegenüberliegenden Ende des Kulturbehälters 60. Selbst verständlich kann die Wandung, wie beispielsweise in Figur 5 gezeigt, auch eine zylindrische, nicht-konische Form aufweisen.

Die Wandung 62 besteht bevorzugt aus drei Wandungselementen 62a, b, c, die jeweils an der Gießschale 12 mittels eines Scharniers angebracht sind. Die gezeigten Wandungselemente 62a, b, c lassen sich so nach außen aufklappen, um beispielsweise den Wurzelballen freizugeben, sodass er eingestellt oder herausgenommen und geschult werden kann.

Die Wandung 62 besitzt eine Struktur aus matrixförmige angeordneten Löchern 63, sodass eine Belüftung des Wurzelballens möglich ist. Der Kulturbehälter 60 weist ferner eine Abdeckung 64 auf, die den Deckel des Kulturbehälters 60 bildet, wobei eine Öffnung vorgesehen ist, sodass der Stamm der Pflanze hindurchtreten kann. Wie sich aus Figur 5b ergibt, ist die Abdeckung 64 ebenfalls in drei Abdeckungselemente aufgeteilt, die jeweils den Wandungselementen 62a, b, c zugeordnet sind.

Die drei Abdeckungselemente 64a, b, c können ebenfalls über ein Scharnier an den jeweiligen Wandungselementen 62a, b, c angebracht sein, sodass auch sie gegenüber dem jeweiligen Wandungselement geschwenkt werden können. Dies ist beispielsweise in Figur 5d dargestellt.

In der Schnittdarstellung von Figur 5c ist noch zu erkennen, dass der Kulturbehälter 60 einen Boden 66 aufweist, der gegenüber dem Boden 16 der Gießschale 12 etwas erhöht ist. Auch der Boden 66 verfügt über eine Struktur von Löchern, die eine Belüftung ermöglichen.

In Figur 5c ist darüber hinaus zu erkennen, dass der Boden 66 nicht mit der Wandung 62 verbunden ist, sondern als eigenständiges Element auf dem Boden 16 der Gießschale 12 steht.

In Figur 5b ist zudem noch gezeigt, dass sowohl die Wandungselemente als auch die Abdeckungselemente über Scharniere 68 und 70 befestigt sind und dass die einzelnen Wandungselemente 62a, b, c jeweils radial nach außen laufende Stege 74 besitzen, die als Griffleisten dienen können und die Handhabung erleichtern. Auch die Abdeckungselemente 64a, b, c weisen solche Stege 72 auf, die sich rechtwinklig zu den Abdeckungselemente nach oben erstrecken. Zur Veranschaulichung ist noch der Stamm S der Pflanze angedeutet, der sich durch die zentrische Ausnehmung in der Abdeckung 64 nach oben erstreckt.

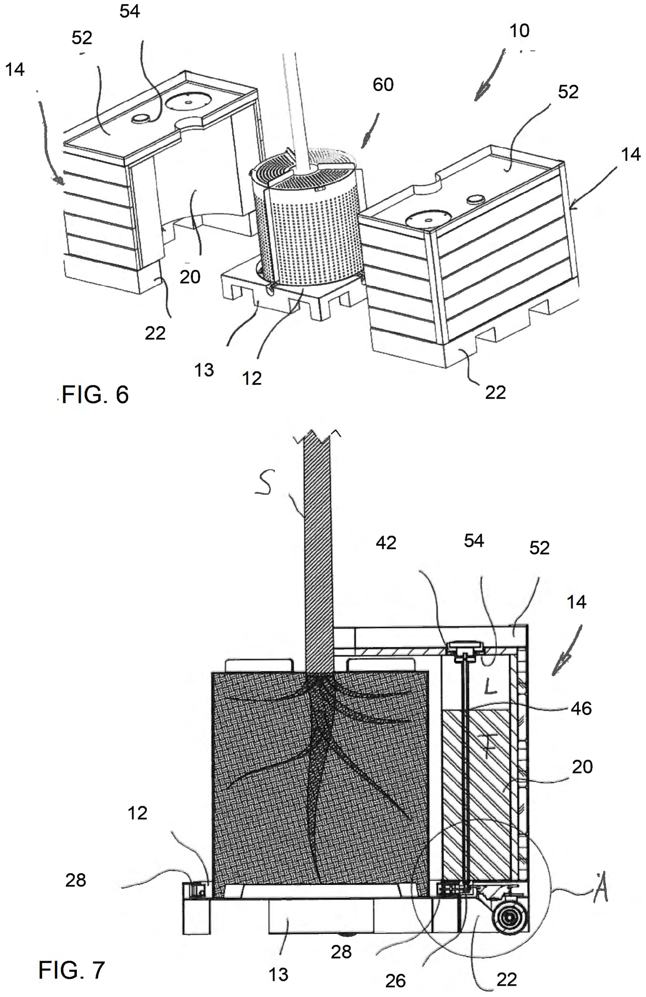

In Figur 6 ist eine Bewässerungsvorrichtung 10 dargestellt, die einen Kulturbehälter 60 in einer Gießschale 12 sowie zwei Gießbehälter 14 aufweist. Die beiden Gießbehälter 14 sind identisch aufgebaut und entsprechen in etwa dem Gießbehälter 14' in Figur 4.

Die Gießschale 12 steht auf einem Transportfuß 13, der ausgelegt ist, bspw. von einem Gabelstapler transportiert zu werden. Die beiden Gießbehälter 14 weisen ebenfalls einen Transportfuß 22 auf, der ebenfalls ausgelegt ist, beispielsweise von einem Gabelstapler transportiert zu werden. Die beiden Gießbehälter 14 werden zusammengeschoben, sodass sie den Kulturbehälter 60 zwischen sich aufnehmen. Die Behältervolumen 20 der beiden Gießbehälter sind an ihren Innenseiten folglich mit einer Rundung versehen, die an die Rundung des Kulturbehälters 60 angepasst ist. Beim Zusammenschieben werden Auslaufrohr 26 und Auslaufelement 28, das an der Gießschale 12 vorgesehen ist, miteinander verbunden. Dadurch ist es möglich, dass Wasser aus dem jeweiligen Behältervolumen 20 in die Gießschale 12 fließen kann.

Darüber hinaus weisen die beiden Gießbehälter 14 auch jeweils eine Auffangschale 52 auf, um auf diese Weise Regenwasser sammeln zu können. Über eine Öffnung 54 in der Auffangschale kann das gesammelte Wasser in das Behältervolumen abfließen.

Die in Figur 6 gezeigte Bewässerungsvorrichtung 10 ist folglich modular aufgebaut, wobei die Gießbehälter 14 sowie die Gießschale 12 mit dem Kulturbehälter 16 die einzelnen Module bilden. Der Kulturbehälter 60 in der Gießschale 12 kann folglich je nach Anwendungsfall mit einem Gießbehälter oder mit zwei Gießbehältern ausgestattet werden.

In Figur 7 ist nun die Bewässerungsvorrichtung 10 von Figur 6 in einer Schnittdarstellung gezeigt, wobei sie den Kulturbehälter 60 sowie einen Gießbehälter 14 aufweist. Der Gießbehälter 14 ist mit der Gießschale 12 über das Auslaufrohr 26 und das Auslaufelement 28 miteinander gekoppelt, sodass Wasser F aus dem Behältervolumen 20 in die Gießschale 12 fließen kann. In der Auffangschale 52 ist die Öffnung 54 eingebracht, die eine Verbindung zum Behältervolumen 20 herstellt. Zur Abdichtung dieser Öffnung 54 ist der Verschlusskörper 42 vorgesehen, der mit dem Ventilsitz 48 dichtend zusammenwirkt. Ist das Ventil geschlossen, kann weder Luft noch Wasser von oben in das Behältervolumen 20 eindringen. Darüber hinaus kann auch keine Luft aus dem Behältervolumen 20 nach außen austreten. Ist das Ventil geöffnet, fließt Wasser aus der Auffangschale 52 durch die Öffnung 54 in das Behältervolumen 20.

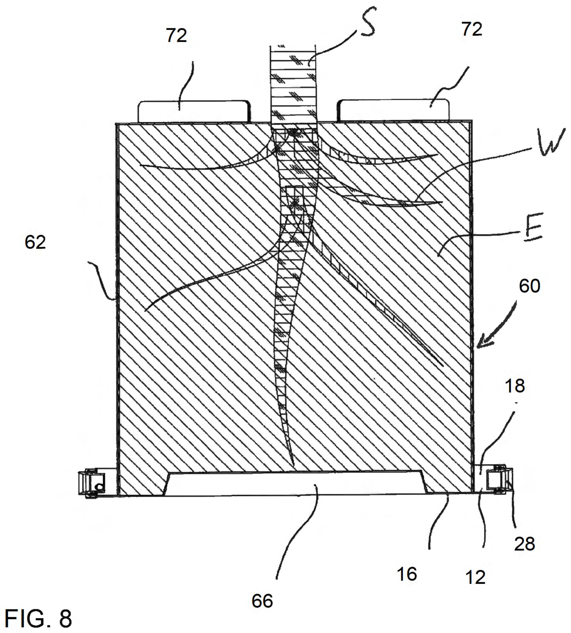

In Figur 8 ist der Kulturbehälter 60 in der Gießschale 12 in einer Schnittansicht gezeigt. Innerhalb des durch die Wandung 62 des Kulturbehälters 60 umschlossenen Raums ist ein Wurzelballen aufgenommen, der Erde E und Wurzeln W umfasst. Durch die Ausnehmung in der Abdeckung 64 erstreckt sich der Stamm S der Pflanze. In dieser Figur ist gut zu erkennen, dass das Auslaufelement 28 in der Wandung 18 der Gießschale 12 aufgenommen ist, vorzugsweise drehbar aufgenommen ist.

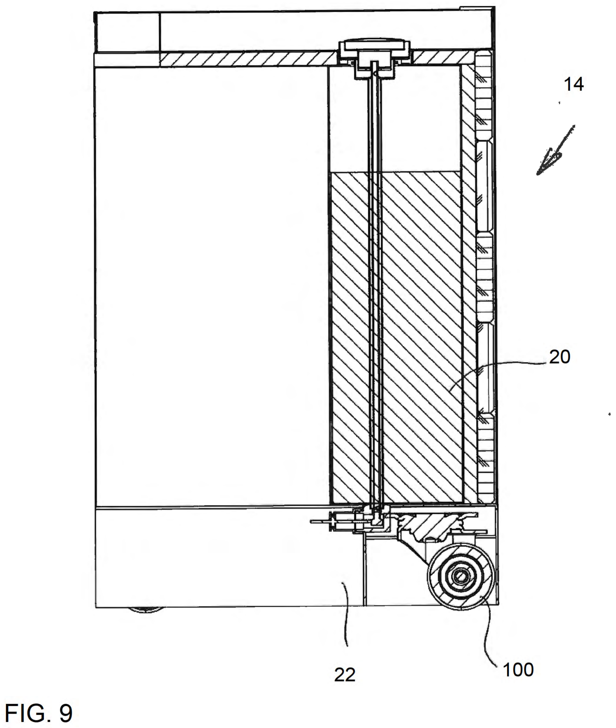

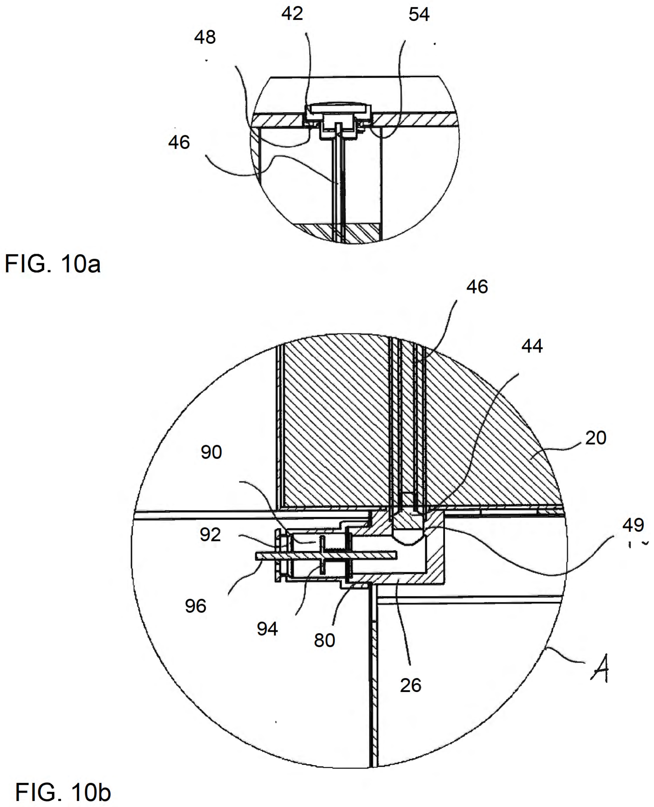

In Figur 9 ist der modulare Gießbehälter 14 in einer Schnittansicht gezeigt. Neben den bereits beschriebenen Bauelementen ist noch eines von üblicherweise zwei Transporträdern 100 gezeigt, das einen Transport erleichtert. In Figuren 10a und 10b sind die beiden Verschlusskörper 42, 44 des Ventils 40 nochmals im Detail dargestellt. Gut zu erkennen ist in Figur 10a, dass der Verschlusskörper 42 mit dem Ventilsitz 48 dichtend zusammenwirkt, wenn der Verschlusskörper 42 in seiner unteren Position ist.

Der untere Verschlusskörper 44 befindet sich, wie in Figur 10b dargestellt, in seiner geschlossenen Position, d. h. der Verschlusskörper 44 liegt dichtend am Ventilsitz 49 an. Bewegt sich der Schaft 46 nach unten, bewegt sich der Verschlusskörper 44 ebenfalls nach unten und öffnet damit die untere Öffnung 24 im Gießbehälter 14.

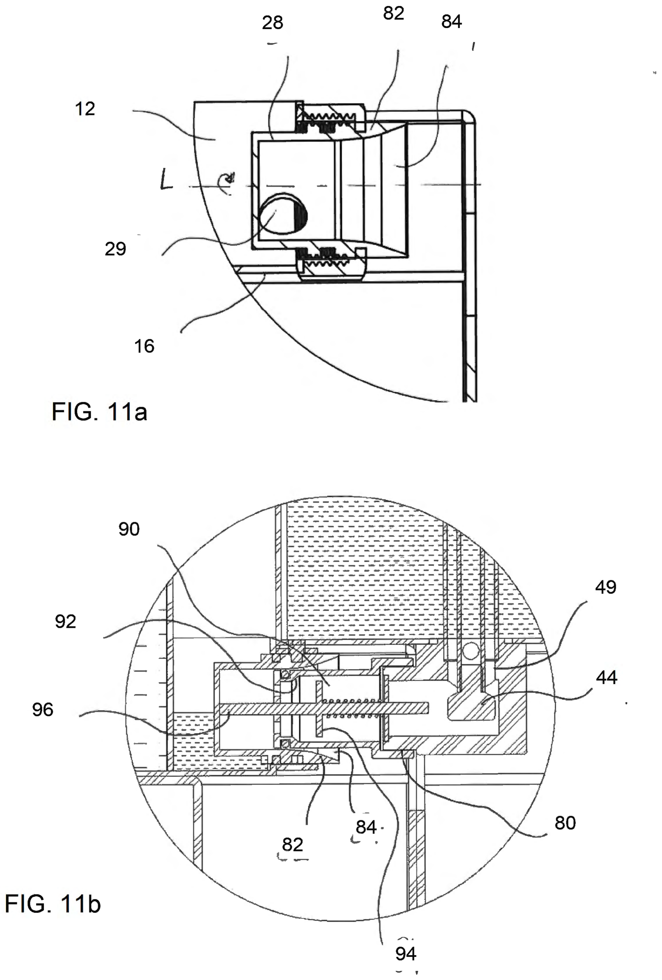

Wie in Figur 10b dargestellt, ist das Auslaufrohr 26 als Kupplungselement 80 ausgelegt, das mit einem Kupplungsgegenstück 82 (vergleiche Figur 11a) zusammenwirken kann. Im Kupplungselement 80 ist ein Ventil 90 mit einem Verschlusskörper 94 an einem Schaft 96 vorgesehen. In einer Öffnung 92 des Kupplungselements 80 ist ein Ventilsitz untergebracht, der mit dem Verschlusskörper 94 dichtend zusammenwirken kann. Der Verschlusskörper 94 dient folglich dazu, die Öffnung 92 im nicht gekuppelten Zustand zu verschließen, sodass kein Wasser aus dem Behältervolumen 20 durch die Öffnung 92 nach außen gelangen kann.

In Figur 11a ist das Kupplungsgegenstück 82 dargestellt, das Teil des Auslaufelements 28 ist. Wie zuvor bereits erwähnt, weist das Auslaufelement 28 die Auslauföffnung 29 auf, die exzentrisch zu der Längsachse L angeordnet ist. Durch Drehen des Auslaufelements 28 um die Längsachse L lässt sich folglich die Auslauföffnung 29 in ihrem Abstand zum Boden 16 der Gießschale 12 verändern. Darüber kann, wie bereits erläutert, die Wassermenge bzw. der Wasserpegel in der Gießschale 12 einstellen.

Das Auslaufelement 28 weist auf seiner außerhalb der Gießschale 12 liegenden Seite eine trichterförmige Aufnahme 84 auf, in die das Kupplungselement 80 vorzugsweise rastend eingesteckt werden kann. Dieser Zustand, bei dem das Kupplungselement 80 mit dem Kupplungsgegenstück 82 gekoppelt ist, ist in Figur 11b dargestellt. Beim Koppeln drückt das Kupplungsgegenstück 82 den Schaft 96 in Richtung des Auslaufrohrs 26, sodass der Verschlusskörper 94 die Öffnung 92 freigibt. Dann ist es möglich, dass Wasser aus dem Behältervolumen 20 durch das Auslaufrohr 26 und die Öffnung 29 im Auslaufelement 28 in die Gießschale 12 laufen kann. Wird die Gießschale 12 vom Gießbehälter 14 wieder getrennt, sorgt eine Feder im Kupplungselement 80 dafür, dass der Verschlusskörper 94 in Richtung der Öffnung 92 gedrückt wird und diese dichtend abschließt.

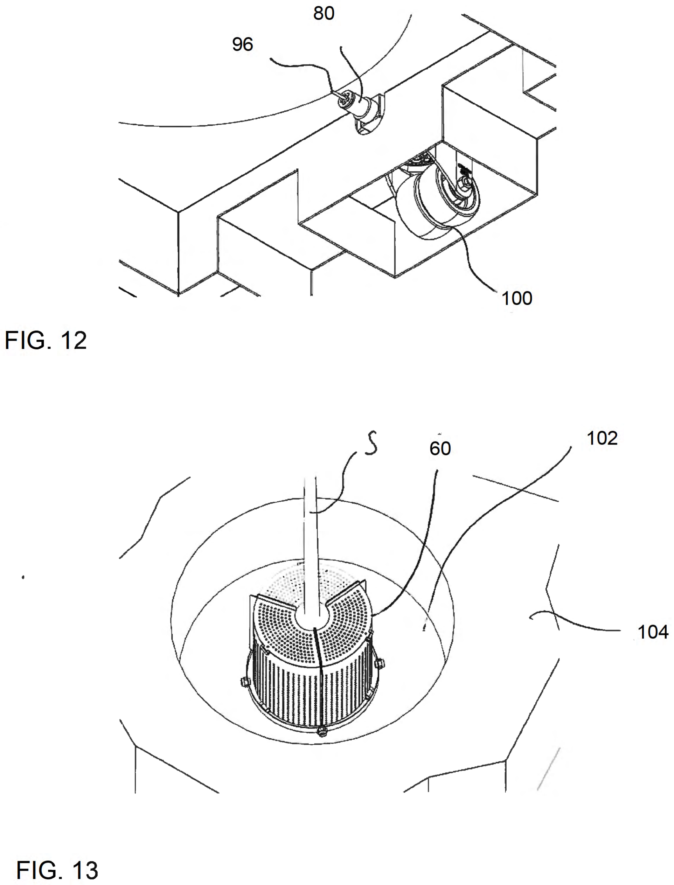

In Figur 12 ist ein Ausschnitt des Gießbehälters 14 im Bereich des Kupplungselements 80 dargestellt. Deutlich zu erkennen ist der Schaft 96, der am Kupplungselement 80 hervorsteht. Darüber hinaus ist in dieser Figur 12 auch das zuvor beschriebene Transportrad 100 zu erkennen.

In Figur 13 ist ein Kulturbehälter 60 dargestellt, der in eine Pflanzgrube 102 im Erdboden 104 gesetzt ist. Dies Figur soll verdeutlichen, dass der Kulturbehälter 60 aus der Bewässerungsvorrichtung 10 herausgenommen und als Einheit in die Pflanzengruppe 102 eingesetzt und dort auch über angeschlossene Gießbehälter bewässert werden kann.

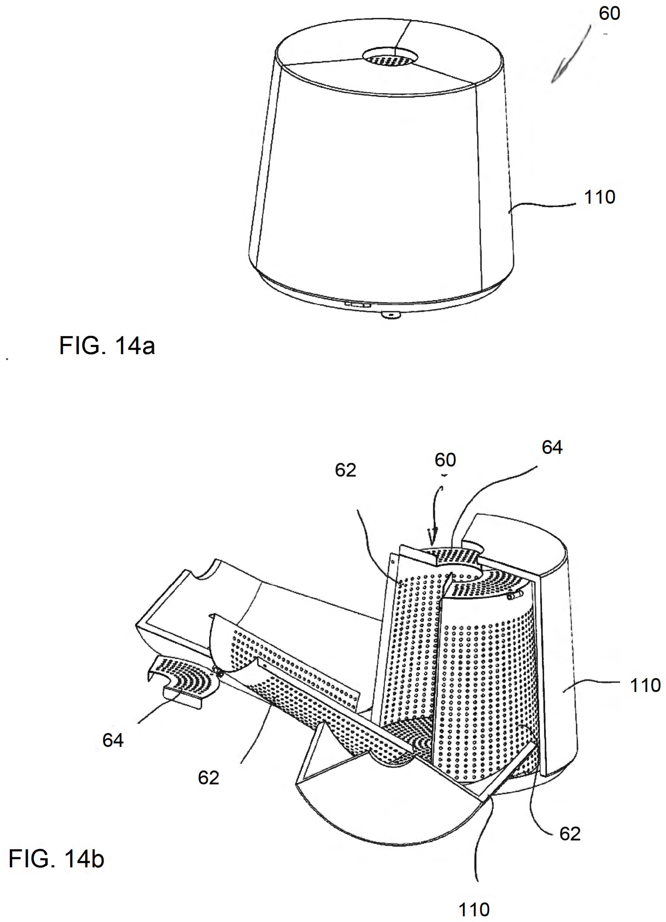

In Figuren 14a, b ist der Kulturbehälter 60 dargestellt, wobei eine als Pflanztopf dienende Ummantelung 110 zusätzlich vorgesehen ist. Diese Ummantelung, die als Schutz oder als optisches Designelement dient, weist drei Elemente 110 auf, die an der Gießschale 12 schwenkbar angebracht sind, sodass sie wie die Wandungselemente 62 nach außen geschwenkt werden können. Die Ummantelung 110 hat eine geschlossene Struktur im Gegensatz zu der Lochstruktur der Wandungselemente 62. Die Elemente 110 umschließen, wie sich gut aus Figur 14a ergibt, sowohl die Wandung 62 als auch die Abdeckung 64 des Kulturbehälters 60.

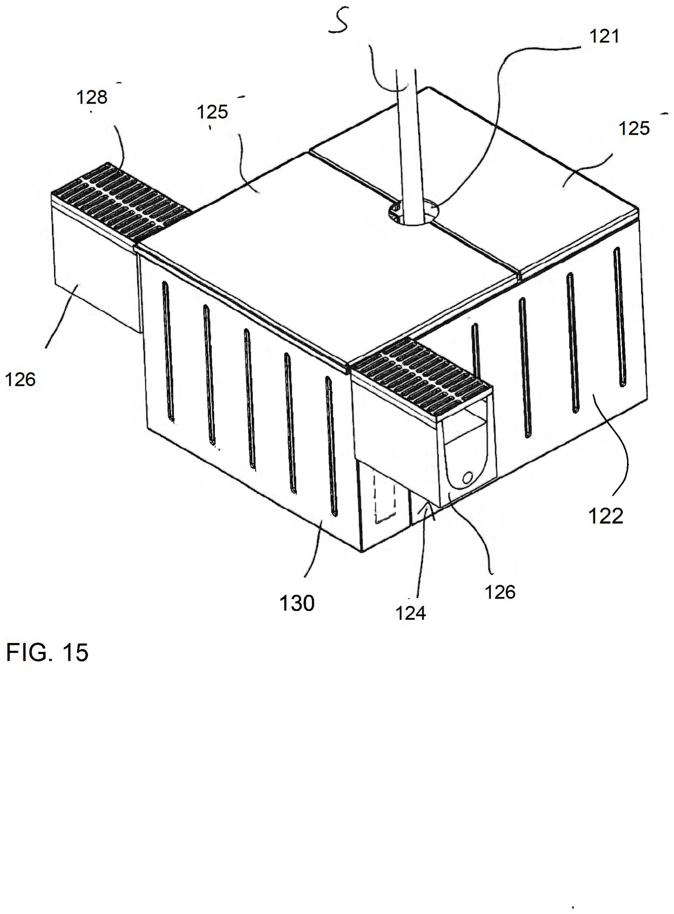

In den Figuren 15-18 ist nun ein Bewässerungssystem in verschiedenen Ansichten dargestellt. Dieses Bewässerungssystem umfasst eine Bewässerungsvorrichtung 10 mit einer Gießschale 12 und zwei Gießbehältern 14, wie sie zuvor beschriebenen wurden. Die Bewässerungsvorrichtung 10 ist in einer Wanne 122 des Bewässerungssystems aufgenommen, die bevorzugt im Erdreich vorgesehen ist. Die Wanne 122 besitzt im oberen Bereich eine Abdeckung 125 mit einer Ausnehmung 121 für den Stamm der Pflanze, wobei die Abdeckung 125 -im verbauten Zustand- in etwa auf Bodenhöhe liegt. Die Abdeckung 125 verhindert ein Eindringen von nicht gefiltertem Oberflächenwasser im Bereich der Pflanze, wenn die Abdeckung eine geschlossene Struktur aufweist. Selbstverständlich könnten auch Öffnungen in der Abdeckung vorgesehen sein, um bspw. Regenwasser nach unten in die Bewässerungsvorrichtung 10 zu führen. Ferner weist die Wanne 122 Verstärkungsrippen in der Seitenwand auf. Diese Verstärkungsrippen sind in die vorzugsweise aus Blech gefertigte Seitenwand eingedrückt, um die Stabilität zu erhöhen, damit der Behälter dem Erddruck standhält. Der Behälterboden hat in der Mitte ein großes Loch über das Wasser austreten und versickern kann. Der Aufbau der Bewässerungsvorrichtung 10 selbst ist so wie in Figur 6 dargestellt, sodass auf deren nochmalige Beschreibung verzichtet werden kann.

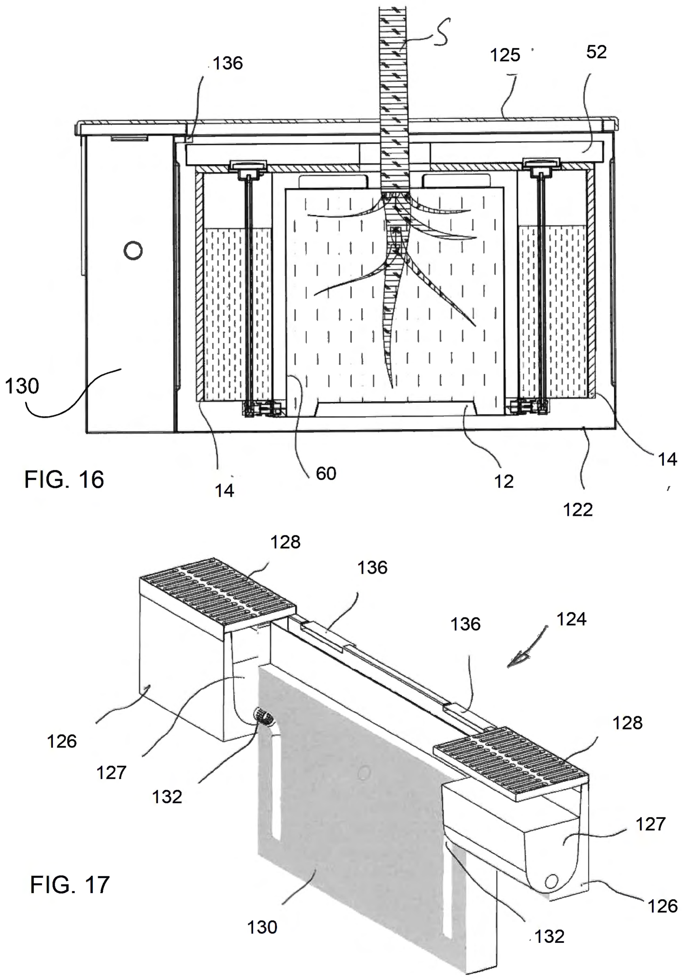

Das Bewässerungssystem 120 weist zumindest eine Rinnenvorrichtung 124 auf, die in Figur 17 dargestellt ist. Diese Rinnenvorrichtung 124 soll dazu dienen, Regenwasser bzw. Oberflächenwasser aufzufangen, zu filtern und dann in zumindest einen der Gießbehälter 14 vorzugsweise beide Gießbehälter 14 abzugeben. Diese Rinnenvorrichtung ist benachbart der Wanne 122 vorgesehen.

Die Rinnenvorrichtung 124 weist hierfür zwei Rinnenelemente 126 auf, die einen Behälter 130 zwischen sich aufnehmen. Die Rinnenelemente126 weisen jeweils eine Rinne auf, die nach oben offen ist und von einem Abdeckgitter 128 abgedeckt ist. Innerhalb der Rinne sind Filterelemente 127 vorgesehen, die das von oben kommende Wasser, das durch die Abdeckgitter 128 fließt, filtern und dann über Abflussrohre 132 in den Behälter 130 abgeben.

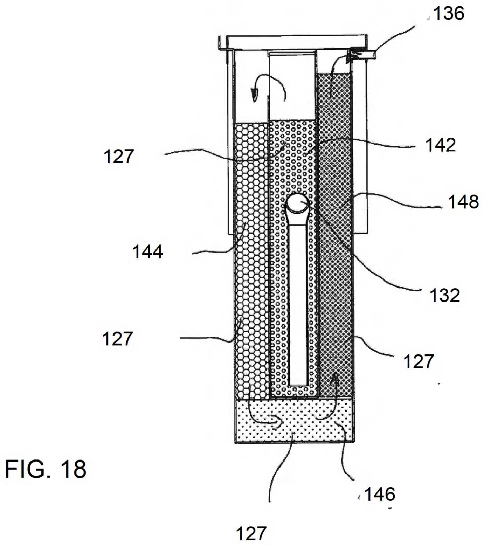

Der Behälter 130 weist, wie in Figur 18 dargestellt, mehrere Kammern 142, 144, 146 und 148 auf, durch die das einfließende Wasser hindurchfließt, um am Ende über einen oder mehrere Überläufe 136 in die Auffangschale 52 eines Gießbehälters 14 abzufließen.

Wie sich aus Figur 17 ergibt, mündet das Abflussrohr 132 der Rinne in die mittlere Kammer 142. Bedingt durch entsprechend vorgesehene Wandungen im Behälter 130 läuft das in dieser Kammer 142 befindliche Wasser in die nachfolgende Kammer 144, durchläuft dann die untere Kammer 146 und gelangt in die rechte Kammer 148. Dort sind im oberen Bereich die Überläufe 136 vorgesehen, über die das Wasser in die Auffangschale 52 abläuft.

Bevorzugt sind in allen vier Kammern 142-148 Filterelemente 127 vorgesehen, wobei die Filtereigenschaften dieser Filterelemente 127 unterschiedlich sein können. So kann beispielsweise mit einer Grobfilterung in der ersten Kammer begonnen werden und mit einer Feinfilterung in der letzten Kammer abgeschlossen werden.

Dieses Bewässerungssysteme 120 kann nun bedingt durch die Rinnenvorrichtung 124 deutlich mehr Oberflächenwasser sammeln, als dies die Auffangschalen 52 der Bewässerungsvorrichtung 10 alleine leisten könnten. Dadurch ist es möglich, die Behältervolumen 20 der Gießbehälter 14 nach jedem Regen ausreichend zu füllen, sodass auch längere Trockenphasen gut überwunden werden können.

Insgesamt zeigt sich, dass die Bewässerungsvorrichtung 10 und das Bewässerungssystem 120 mit der einstellbaren Wasserhöhe in der Gießschale 12 ein sehr flexibles Bewässern einer Pflanze im Kulturbehälter 60 ermöglicht.
Nachfolgend werden bevorzugte Ausführungsbeispiele dargestellt:
Klausel 1. Vorrichtung zur Bewässerung von Pflanzen, mit
   einer Gießschale, die einen Boden und eine Wandung mit einer Höhe h aufweist und ausgelegt ist, eine Flüssigkeit aufzunehmen und zu halten;
   einem Gießbehälter zur Aufnahme einer Flüssigkeit und -im Arbeitsmoduszur Abgabe der Flüssigkeit in die Gießschale, wobei der Gießbehälter aufweist:
      ein Behältervolumen für die Flüssigkeit, und
      ein Auslaufrohr zum Ausbringen der Flüssigkeit aus dem Behältervolumen in die Gießschale, wobei das Auslaufrohr am Behältervolumen angebracht ist; und
      einem Auslaufelement, das mit dem Auslaufrohr zusammenwirkt und eine Auslauföffnung aufweist, deren Höhe -im Arbeitsmodus- relativ zu dem Auslaufrohr veränderbar ist.
Klausel 2. Vorrichtung nach Klasuel 1, wobei das Auslaufelement ein Rohrelement ist, das zwei winkelig zueinander verlaufende Rohrabschnitte aufweist, wobei einer der beiden Rohrabschnitte am Auslaufrohr drehbar angebracht ist und der andere Rohrabschnitt die Auslauföffnung aufweist.
Klausel 3. Vorrichtung nach Klausel 2, wobei der Winkel zwischen den beiden Rohrabschnitten ein stumpfer Winkel ist.
Klausel 4, Vorrichtung nach Klausel 2 oder 3, wobei sich -im Arbeitsmodus- der erste Rohrabschnitt über die Wandung der Gießschale erstreckt und sich der zweite Rohrabschnitt nach unten Richtung Boden der Gießschale erstreckt, und die Auslassöffnung am zweiten Rohrabschnitt die Höhe des Flüssigkeitspegels in der Gießschale bestimmt.
Klausel 5. Vorrichtung nach einem der vorhergehenden Ansprüche, wobei das Auslaufrohr an der Seite des Behältervolumens angebracht ist.
Klausel 6. Vorrichtung nach Klasuel 1, wobei das Auslaufelement in einer Öffnung in der Wandung der Gießschale um eine Längsachse L drehbar gehalten ist und die Auslauföffnung versetzt zu der Längsachse L vorgesehen ist, so dass sich durch Drehen des Auslaufelements die Höhe gegenüber dem Boden der Gießschale verändern lässt.
Klausel 7. Vorrichtung nach Klausel 6, wobei ein Ende des Auslaufelements als Kupplungselement ausgelegt ist, und wobei das Ende des Auslaufrohrs als Kupplungsgegenstück ausgelegt ist, so dass das Auslaufrohr lösbar mit dem Auslaufelement kuppelbar ist.
Klausel 8. Vorrichtung nach Klasuel 7, wobei das Kupplungsgegenstück ein erstes Ventil aufweist, das im gekuppelten Zustand geöffnet und im nicht-gekuppelten Zustand geschlossen ist.
Klausel 9. Vorrichtung nach einer der vorhergehenden Klauseln, wobei der Gießbehälter ein zweites und ein drittes Ventil aufweist, die miteinander gekoppelt sind, wobei das zweite Ventil eine Auslass-Öffnung aus dem Behältervolumen zum Auslaufrohr öffnet und schließt und das dritte Ventil eine Zulauf-Öffnung in das Behältervolumen schließt und öffnet.
Klausel 10. Vorrichtung nach Klasuel 9, mit
   einer Auffangschale für Flüssigkeit, die eine Verbindung zur Zulauf-Öffnung aufweist, und einem Steuerelement, das ausgelegt ist, das dritte Ventil zu öffnen, wenn ein Flüssigkeitspegel in der Auffangschale einen Schwellenwert überschreitet, um die Flüssigkeit in das Behältervolumen zu leiten, wobei das zweite Ventil dann die Auslass-Öffnung schließt.
Klausel 11. Vorrichtung nach Klasuel 10, wobei das Steuerelement einen Schwimmer aufweist.
Klausel 12. Vorrichtung nach einer der vorhergehenden Klauseln, wobei zwei Gießbehälter vorgesehen sind.
Klausel 13. Vorrichtung nach einer der vorhergehenden Klauseln, wobei die Gießschale kreisförmig ausgebildet und auf einem Transportboden vorgesehen ist.
Klausel 14. Vorrichtung nach einer der vorhergehenden Klauseln, wobei in der Gießschale ein Kulturbehälter vorgesehen ist, der aus mehreren Wandelementen aufgebaut ist, die eine Lochstruktur aufweisen und voneinander trennbar sind.
Klausel 15. Vorrichtung nach Klausel 14, wobei die Wandelemente schwenkbar an der Gießschale angebracht sind.
Klausel 16. Vorrichtung nach Klausel 14 oder 15, wobei die Wandelemente eine konische Kulturbehälter-Form bilden.
Klausel 17. Vorrichtung nach einer der vorhergehenden Klauseln, insbesondere nach Anspruch 14, wobei an der Gießschale ein Pflanztopf vorgesehen ist, der aus mehreren Wandelementen aufgebaut ist, die eine geschlossene Struktur aufweisen und voneinander trennbar sind.
Klausel 18. Vorrichtung nach Klausel 17, wobei die Wandelemente des Pflanztopfs eine geschlossene Struktur aufweisen und/oder schwenkbar an der Gießschale angebracht sind.
Klausel 19. Vorrichtung nach Anspruch 18, wobei die Wandelemente des Pflanztopfs den Kulturbehälter zumindest teilweise umschließen.
Klausel 20. System zur Bewässerung einer Pflanze, mit
   einer Vorrichtung zur Bewässerung, Bewässerungsvorrichtung, nach einer der Klauseln 1 bis 19,
   einer Wanne, die ausgebildet ist, die Bewässerungsvorrichtung vorzugsweise vollständig aufzunehmen; und
   einer Rinnenvorrichtung, die der Wanne zugeordnet und ausgelegt ist, Oberflächenwasser zu sammeln und der Bewässerungsvorrichtung zuzuführen.
Klausel 21. System nach Klausel 20, wobei die Rinnenvorrichtung eine Filtereinrichtung aufweist, die ausgelegt ist, das aufgesammelte Wasser vor der Zuführung an die Bewässerungsvorrichtung zu filtern.
Klausel 22. System nach Klausel 20 oder 21, wobei die Rinnenvorrichtung zumindest ein Rinnenelement und einen Auffangbehälter aufweist, wobei das Rinnenelement ausgelegt ist, gesammeltes Oberflächenwasser in den Auffangbehälter zu führen, und der Auffangbehälter ausgelegt ist, das erhaltene Oberflächenwasser an die Bewässerungsvorrichtung zu führen.
Klausel 23. System nach Klausel 21 und 22, wobei die Filtereinrichtung Filterelemente aufweist, wobei dem Rinnenelement ein Filterelement zugeordnet ist und/oder dem Auffangbehälter ein Filterelement zugeordnet ist.
Klausel 24. System nach Klausel 22, wobei der Auffangbehälter einen Überlauf zu der Bewässerungsvorrichtung aufweist.

### Bezugszeichenliste:

| | | | |
|---|---|---|---|
| 10 | Bewässerungsvorrichtung | 68 | Scharnier |
| 12 | Gießschale | 70 | Scharnier |
| 13 | Transportfuß | 72 | Steg |
| 14 | Gießbehälter | 74 | Steg |
| 16 | Boden | | |
| 17 | Überlauf | | |
| 18 | Wandung | 100 | Transportrad |
| 20 | Behältervolumen | 110 | Ummantelung |
| 22 | Fuß des Gießbehälters | 120 | Bewässerungssystem |
| | | 121 | Ausnehmung |
| 24 | Öffnung im Gießbehälter | 122 | Wanne |
| 26 | Auslaufrohr | 124 | Rinnenvorrichtung |
| 28 | Auslaufelement | 125 | Abdeckung |
| 29 | Auslauföffnung | 126 | Rinne |
| 30 | Pflanztopf | 127 | Filterelement |
| 32 | Loch | 128 | Abdeckgitter |
| 40 | Ventil | | |
| 42 | Erster Verschlusskörper | 130 | Behälter |
| 44 | Zweiter Verschlusskörper | 132 | Abflussrohr |
| 46 | Schaft | | |
| 48,49 | Ventilsitz | 136 | Überlauf |
| 52 | Auffangschale | | |
| 54 | Öffnung | 142 | Kammer |
| 60 | Kulturbehälter | 144 | Kammer |
| 62 | Wandung | 146 | Kammer |
| 62a,b,c | Wandungselement | 148 | Kammer |
| 63 | Loch | | |
| 64 | Abdeckung | | |
| 64a,b,c | Abdeckungselement | | |
| 66 | Boden | | |

## Patentansprüche

1. Vorrichtung zur Bewässerung von Pflanzen, mit
einer Gießschale, die einen Boden und eine Wandung mit einer Höhe h aufweist und ausgelegt ist, eine Flüssigkeit aufzunehmen und zu halten;
einem Gießbehälter zur Aufnahme einer Flüssigkeit und -im Arbeitsmoduszur Abgabe der Flüssigkeit in die Gießschale, wobei der Gießbehälter aufweist:
ein Behältervolumen für die Flüssigkeit, und
ein Auslaufrohr zum Ausbringen der Flüssigkeit aus dem Behältervolumen in die Gießschale, wobei das Auslaufrohr am Behältervolumen angebracht ist; und
einem Auslaufelement, das mit dem Auslaufrohr zusammenwirkt und eine Auslauföffnung aufweist, deren Höhe -im Arbeitsmodus- relativ zu dem Auslaufrohr veränderbar ist.

2. Vorrichtung nach Anspruch 1, wobei das Auslaufelement ein Rohrelement ist, das zwei winkelig zueinander verlaufende Rohrabschnitte aufweist, wobei einer der beiden Rohrabschnitte am Auslaufrohr drehbar angebracht ist und der andere Rohrabschnitt die Auslauföffnung aufweist.

3. Vorrichtung nach Anspruch 2, wobei der Winkel zwischen den beiden Rohrabschnitten ein stumpfer Winkel ist.

4. Vorrichtung nach Anspruch 2 oder 3, wobei sich -im Arbeitsmodus- der erste Rohrabschnitt über die Wandung der Gießschale erstreckt und sich der zweite Rohrabschnitt nach unten Richtung Boden der Gießschale erstreckt, und die Auslassöffnung am zweiten Rohrabschnitt die Höhe des Flüssigkeitspegels in der Gießschale bestimmt.

5. Vorrichtung nach einem der vorhergehenden Ansprüche, wobei das Auslaufrohr an der Seite des Behältervolumens angebracht ist.

6. Vorrichtung nach Anspruch 1, wobei das Auslaufelement in einer Öffnung in der Wandung der Gießschale um eine Längsachse L drehbar gehalten ist und die Auslauföffnung versetzt zu der Längsachse L vorgesehen ist, so dass sich durch Drehen des Auslaufelements die Höhe gegenüber dem Boden der Gießschale verändern lässt.

7. Vorrichtung nach Anspruch 6, wobei ein Ende des Auslaufelements als Kupplungselement ausgelegt ist, und wobei das Ende des Auslaufrohrs als Kupplungsgegenstück ausgelegt ist, so dass das Auslaufrohr lösbar mit dem Auslaufelement kuppelbar ist, wobei vorzugsweise das Kupplungsgegenstück ein erstes Ventil aufweist, das im gekuppelten Zustand geöffnet und im nicht-gekuppelten Zustand geschlossen ist.

8. Vorrichtung nach einem der vorhergehenden Ansprüche, wobei der Gießbehälter ein zweites und ein drittes Ventil aufweist, die miteinander gekoppelt sind, wobei das zweite Ventil eine Auslass-Öffnung aus dem Behältervolumen zum Auslaufrohr öffnet und schließt und das dritte Ventil eine Zulauf-Öffnung in das Behältervolumen schließt und öffnet.

9. Vorrichtung nach Anspruch 8, mit
einer Auffangschale für Flüssigkeit, die eine Verbindung zur Zulauf-Öffnung aufweist, und
einem Steuerelement, das ausgelegt ist, das dritte Ventil zu öffnen, wenn ein Flüssigkeitspegel in der Auffangschale einen Schwellenwert überschreitet, um die Flüssigkeit in das Behältervolumen zu leiten, wobei das zweite Ventil dann die Auslass-Öffnung schließt; wobei vorzugsweise das Steuerelement einen Schwimmer aufweist.

10. Vorrichtung nach einem der vorhergehenden Ansprüche, wobei in der Gießschale ein Kulturbehälter vorgesehen ist, der aus mehreren Wandelementen aufgebaut ist, die eine Lochstruktur aufweisen und voneinander trennbar sind, wobei vorzugsweise die Wandelemente schwenkbar an der Gießschale angebracht sind.

11. System zur Bewässerung einer Pflanze, mit
einer Vorrichtung zur Bewässerung, Bewässerungsvorrichtung, nach einem der Ansprüche 1 bis 10,
einer Wanne, die ausgebildet ist, die Bewässerungsvorrichtung vorzugsweise vollständig aufzunehmen; und
einer Rinnenvorrichtung, die der Wanne zugeordnet und ausgelegt ist, Oberflächenwasser zu sammeln und der Bewässerungsvorrichtung zuzuführen.

12. System nach Anspruch 11, wobei die Rinnenvorrichtung eine Filtereinrichtung aufweist, die ausgelegt ist, das aufgesammelte Wasser vor der Zuführung an die Bewässerungsvorrichtung zu filtern.

13. System nach Anspruch 11 oder 12, wobei die Rinnenvorrichtung zumindest ein Rinnenelement und einen Auffangbehälter aufweist, wobei das Rinnenelement ausgelegt ist, gesammeltes Oberflächenwasser in den Auffangbehälter zu führen, und der Auffangbehälter ausgelegt ist, das erhaltene Oberflächenwasser an die Bewässerungsvorrichtung zu führen.

14. System nach Anspruch 12 und 13, wobei die Filtereinrichtung Filterelemente aufweist, wobei dem Rinnenelement ein Filterelement zugeordnet ist und/oder dem Auffangbehälter ein Filterelement zugeordnet ist.

15. System nach Anspruch 13, wobei der Auffangbehälter einen Überlauf zu der Bewässerungsvorrichtung aufweist.
